# FASCICULE DE BREVET EUROPEEN

(11) **EP 2 943 392 B1**
(45) Date de publication et mention de la délivrance du brevet: **13.03.2019**
(21) Numéro de dépôt: 13827012.9
(22) Date de dépôt: 19.12.2013
(51) Int. Cl.: B62D 21/15, B62D 27/02, B62D 25/06

(54) **PIED ARRIERE LIMITEUR D'EFFORT POUR CABRIOLET**
LASTBEGRENZENDES HINTERBEIN FÜR EIN CABRIOLET
LOAD LIMITING REAR LEG FOR A CONVERTIBLE VEHICLE

(30) Priorité: 09.01.2013 FR 1350175
(43) Date de publication de la demande: 18.11.2015
(73) Titulaire: PSA Automobiles SA, 78300 Poissy (FR)
(72) Inventeur: BENANE, Said, 94550 Chevilly Larue (FR)
(74) Mandataire: Fernandez, Francis Lionel
(86) Numéro de dépôt international: PCT/FR2013/053177
(87) Numéro de publication internationale: WO 2014/108617

(56) Documents cités:
- EP-A1- 1 331 160
- EP-A1- 1 331 161
- EP-A1- 1 702 833
- EP-A1- 2 457 809
- JP-A- H11 180 349

## Description

La présente invention se rapporte au domaine général de la carrosserie, et plus particulièrement des éléments de carrosserie destinés à soutenir le toit des véhicules, notamment des véhicules automobiles.

On sait que, en cas d'accident, la banquette arrière et les ceintures exercent un effort inertiel important sur l'arrière du véhicule, effort qui est généralement repris et supporté notamment par les arcs de toit qui transmettent ledit effort vers l'avant du véhicule.

Sur la plupart des véhicules, le toit étant soutenu, à l'arrière du véhicule, non seulement par des arcs de toit latéraux, qui surplombent les portières, mais également par une traverse arrière de pavillon, il est relativement aisé de répartir un tel effort de choc, et donc de préserver l'habitacle.

Sur certains types de véhicules, en particulier sur les véhicules découvrables tels que les cabriolets, l'absence de traverse de pavillon ou de structure rigide supérieure rend en revanche la structure plus vulnérable aux déformations, ce qui peut conduire, dans certains cas, à un véritable affaissement inertiel mal contrôlé de l'arrière du véhicule.

En particulier, l'intensité du choc peut avoir pour effet de rompre les points de soudure en entraînant une dislocation partielle de la carrosserie, au préjudice de la sécurité des occupants du véhicule.

EP 1 331 160 montre un sous-ensemble de carrosserie, conforme au préambule de la revendication 1, intégré dans une structure de véhicule renforcée, la structure comportant une double paroi, le panneau extérieur étant renforcé par un panneau intérieur de renfort qui s'étend entre les panneaux intérieur et extérieur définissant les éléments de structure et qui est conformé pour permettre une déformation du panneau extérieur inverse à celle du panneau de renfort.

EP 2 457 809 décrit un structure arrière de véhicule présentant des longerons inférieur et supérieur raccordant un panneau arrière au longeron de toit et qui présentent des résistances différentes permettant la transmission déterminée d'un impact.

JP 11-180349 propose un pied arrière de véhicule à déformation programmée.

Les objets assignés à l'invention visent par conséquent à remédier aux inconvénients susmentionnés et à proposer un nouvel agencement de carrosserie qui assure une sécurité accrue des occupants du véhicule, tout en préservant la légèreté du véhicule et la liberté de forme de ce dernier.

Les objets assignés à l'invention sont atteints au moyen d'un sous-ensemble de carrosserie destiné à soutenir l'arrière d'un arc de toit au sein d'une carrosserie de véhicule, ledit sous-ensemble comprenant un pied arrière dont la base inférieure est conçue pour venir se fixer et prendre appui sur la portion arrière de la carrosserie d'un véhicule formant support d'enrouleur de ceinture, ledit sous-ensemble étant caractérisé en ce qu'il comporte un gousset déformable, conçu pour être interposé longitudinalement entre la portion supérieure du pied arrière et l'arc de toit soutenu par ledit sous-ensemble, ledit gousset comprenant à cet effet un premier tronçon de fixation permettant sa fixation au pied arrière, un second tronçon de fixation conçu pour permettre sa fixation à l'arc de toit, et un tronçon intermédiaire fusible libre, qui joint le premier tronçon de fixation au second tronçon de fixation et qui présente une résistance à la compression longitudinale inférieure à celle du pied arrière et à celle de l'arc de toit, de sorte à pouvoir, en cas de choc, s'écraser longitudinalement, en compression entre la portion supérieure du pied arrière et l'arc de toit, afin de dissiper au moins en partie l'énergie du choc, le pied arrière et l'arc de toit recouvrant partiellement le gousset, en le chevauchant respectivement au contact de la face inférieure du premier tronçon de fixation et au contact de la face supérieure du second tronçon de fixation, et en laissant à découvert le tronçon intermédiaire fusible qui forme un pont de raccordement longitudinal entre le pied arrière et l'arc de toit.

Avantageusement, en prévoyant un gousset fusible formant une sorte de coussin amortisseur entre le pied arrière et l'arc de toit correspondant, on crée une zone de déformation programmée, au niveau de laquelle la déformation plastique irréversible de la carrosserie pourra s'opérer de manière prévisible et contrôlée.

En particulier, on pourra ainsi absorber une partie de l'énergie cinétique d'un choc inertiel qui affecte la banquette ou le siège ancré à la portion arrière de carrosserie concernée, et qui tend à forcer le déplacement longitudinal de ladite banquette ou dudit siège de l'arrière vers l'avant du véhicule, en sacrifiant le tronçon fusible du gousset, qui forme une entretoise compressible entre le pied arrière et l'arc.

Avantageusement, on pourra de la sorte éviter les ruptures brutales ou aléatoires de portions arrière de carrosserie ou de points de soudure.

L'invention permettra donc, au moyen d'un agencement pourtant simple et compact, de préserver en cas d'accident la continuité de l'enveloppe protectrice que forme la carrosserie à l'arrière du véhicule, et ainsi de mieux protéger le volume de l'habitacle et d'améliorer la tenue de la banquette arrière, au bénéfice de la sécurité des occupants du véhicule.

De façon particulièrement avantageuse, l'agencement proposé par l'invention, particulièrement léger et discret, évite d'avoir recours à des structures de carrosserie spécifiquement renforcées, ce qui permet un gain significatif de poids.

En outre, la compacité et la polyvalence du sous-ensemble conforme à l'invention permettent d'adapter celui-ci à toute silhouette de véhicule, sans ajouter de contrainte particulière quant au design du véhicule.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue d'ensemble de côté depuis l'intérieur de l'habitacle, un exemple de mise en oeuvre d'un sous-ensemble conforme à l'invention au sein d'une carrosserie de véhicule (ici du côté droit).
La figure 2 illustre, selon une vue de détail de côté, le comportement du sous-ensemble de la figure 1 en cas de choc, avec déformation partielle du gousset fusible.
La figure 3 illustre, selon une vue éclatée en perspective de trois-quarts avant, l'assemblage (côté gauche) d'un sous-ensemble analogue à celui des figures 1 et 2 sur un arc de toit.
La figure 4 illustre, selon une vue éclatée en perspective de face, depuis l'avant du véhicule, l'assemblage, sur un arc de toit, d'un sous-ensemble du type de ceux représentés sur les figures 1 à 3.

La présente invention concerne un sous-ensemble 1 de carrosserie destiné à soutenir l'arrière d'un arc de toit 2 au sein d'une carrosserie 3 de véhicule.

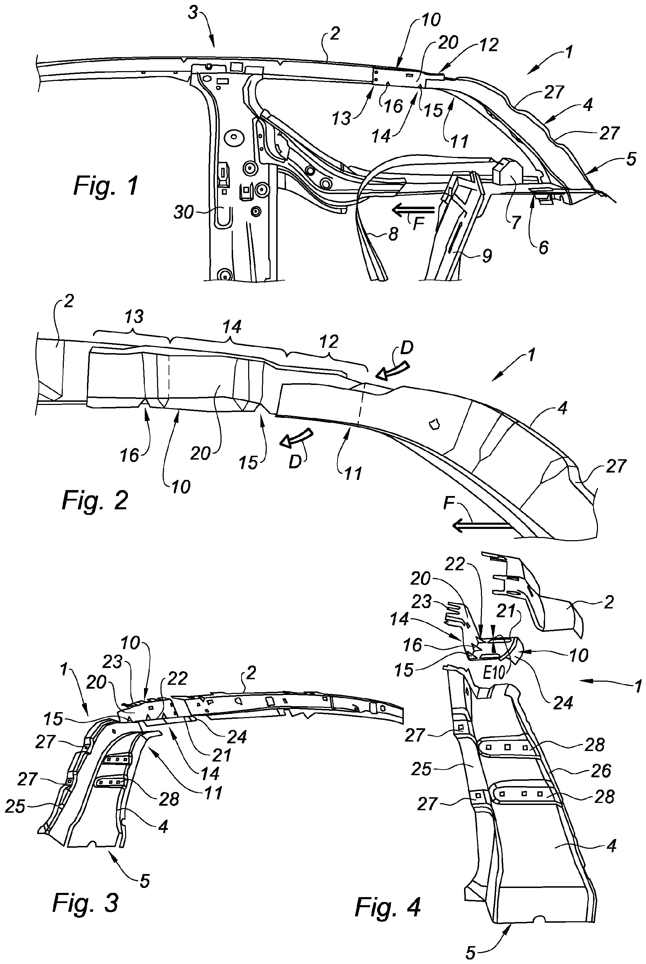

Le sous-ensemble 1 comprenant un pied 4 arrière dont la base inférieure 5 est conçue pour venir se fixer et prendre appui sur la portion arrière de la carrosserie d'un véhicule formant support d'enrouleur de ceinture 6, tel que cela est notamment illustré sur la figure 1.

Le sous-ensemble 1 selon l'invention est donc destiné à être interposé entre le support d'enrouleur 6 et l'arc de toit 2 pour soutenir ce dernier.

L'arc de toit 2 désigne ici, de manière conventionnelle, l'élément rigide destiné à border latéralement le panneau de toit ou la capote du véhicule, à gauche ou à droite dudit véhicule, afin de soutenir ledit panneau de toit ou ladite capote.

Avantageusement, ledit arc de toit 2 pourra surplomber une portière et/ou une baie vitrée dont il formera la portion supérieure du cadre.

Le support d'enrouleur 6 désigne, également de manière conventionnelle, la partie arrière intermédiaire ou basse de la carrosserie, qui forme sensiblement le coin arrière du véhicule, et sur laquelle est fixé et retenu l'enrouleur de ceinture 7 destiné à stocker et à mettre en tension la sangle de ceinture de sécurité 8 équipant le siège latéral 9 (ou la fraction de banquette) correspondant.

Le pied arrière 4, préférentiellement arqué, pourra ainsi former de préférence un montant bordant la lunette arrière du véhicule, et matérialiser l'arête du coin arrière dudit véhicule.

Selon l'invention, le sous-ensemble 1 comporte un gousset 10 déformable, conçu pour être interposé longitudinalement entre la portion supérieure 11 du pied 4 arrière et l'arc de toit 2 soutenu par ledit sous-ensemble 1, ledit gousset 10 comprenant à cet effet un premier tronçon de fixation 12 permettant sa fixation au pied 4 arrière, un second tronçon de fixation 13 conçu pour permettre sa fixation à l'arc de toit 2, et un tronçon intermédiaire 14 fusible libre, qui joint le premier tronçon de fixation 12 au second tronçon de fixation 13 et qui présente une résistance à la compression longitudinale inférieure à celle du pied arrière 4 et à celle de l'arc de toit 2, de sorte à pouvoir, en cas de choc, s'écraser longitudinalement, en compression entre la portion supérieure 11 du pied 4 arrière et l'arc de toit 2, afin de dissiper au moins en partie l'énergie du choc. Selon l'invention, le pied arrière (4) et l'arc de toit (2) recouvrent partiellement le gousset (10), en le chevauchant respectivement au contact de la face inférieure du premier tronçon de fixation (12) et au contact de la face supérieure du second tronçon de fixation (13), et en laissant à découvert le tronçon intermédiaire (14) fusible qui forme un pont de raccordement longitudinal entre le pied arrière (4) et l'arc de toit (2).

Avantageusement, le gousset 10, et plus particulièrement son tronçon intermédiaire 14, forme une interface de liaison à déformation programmée, de type entretoise compressible, qui autorise, en cas de choc d'intensité dépassant un seuil de déclenchement prédéterminé, la portion supérieure 11 du pied, et plus particulièrement le premier tronçon de fixation 12 qui en est solidaire, à se rapprocher longitudinalement de l'arc de toit 2, et plus particulièrement du second tronçon de fixation 13 solidaire de ce dernier, selon un mouvement de déformation D comprenant au moins une composante, de préférence majoritaire, orientée de l'arrière vers l'avant du véhicule.

A cet effet, le tronçon intermédiaire 14 est avantageusement libre, c'est-à-dire non doublé de manière redondante par d'autres entretoises ou par des portions respectives du pied 4 ou de l'arc de toit 2, et ce de manière à former le principal, sinon l'unique, passage d'effort, le plus direct, entre la portion supérieure 11 dudit pied 4 et ledit arc de toit 2.

De la sorte, le tronçon intermédiaire 14 supportera seul l'essentiel sinon la totalité de la contrainte de rapprochement (liée à l'effort de choc F) et formera ainsi l'élément faible, du genre tronçon "fusible" creux, sur lequel la déformation D plastique se concentrera en cas de choc, de manière prévisible, et reproductible d'une carrosserie 3 à l'autre.

A titre d'exemple, l'invention permettra notamment de préserver l'habitacle, et plus particulièrement de limiter le tassement inertiel de l'arrière dudit habitacle, lorsque le véhicule heurtera frontalement un obstacle en provoquant un important effort F inertiel sur le siège 9 et l'enrouleur de ceinture 7.

De préférence, tel que cela est notamment illustré sur les figures 1, 2 et 4, le gousset 10, et plus particulièrement le tronçon fusible 14, présente au moins un premier enfoncement 15 transverse formant une amorce de pli, et de préférence au moins un premier enfoncement transverse 15 et un second enfoncement transverse 16 répartis à distance l'un de l'autre sur la longueur dudit gousset 10, et plus particulièrement sur la longueur dudit tronçon fusible 14, et qui forment des amorces de plis successifs.

Bien qu'il ne soit pas exclu de réaliser les amorces de pli par des découpes avec enlèvement de matière, l'utilisation d'enfoncements 15, 16 sera toutefois préférée, afin notamment de simplifier la fabrication du gousset 10 et/ou d'améliorer sa robustesse et notamment sa rigidité fonctionnelle.

On pourra donc assimiler, par commodité de description, les amorces de plis aux enfoncements 15, 16 correspondants, et réciproquement.

Avantageusement, de telles amorces de plis 15, 16 permettent de fragiliser localement le gousset 10 pour y localiser de manière prévisible les pliages sous compression.

L'utilisation préférentielle de plusieurs amorces de plis 15, 16 le long du gousset 10 permet avantageusement d'obtenir un écrasement longitudinal en cascade, par déformation consécutive de plusieurs tronçons successifs.

La pluralité d'amorces de pliage permet ainsi d'obtenir une meilleure maîtrise de la déformation, qui est rendue plus progressive.

Le cas échéant, on pourra notamment étager ainsi, selon ce qui peut constituer une invention à part entière, la déformation en fonction de l'intensité du choc subi, en prévoyant par exemple une première amorce de pli 15 plus facilement sujette à la déformation sous compression que la seconde amorce de pli 16.

En particulier, la première amorce de pli 15 pourra être située dans le tronçon intermédiaire 14, tandis que la seconde amorce de pli 16 (ou le cas échéant une troisième amorce de pli) pourra être située dans une portion du gousset 10 plus résistante, par exemple au niveau du second tronçon de fixation 13 recouvert et renforcé par l'extrémité de l'arc de toit 2.

De préférence, le ou les enfoncements 15, 16, et plus globalement les amorces de plis, délimitent des évidements sensiblement triangulaires, dont la base s'ouvre sur l'extérieur du gousset 10, tel que cela est notamment visible sur les figures 1 et 2.

Avantageusement, une telle configuration triangulaire favorise le mouvement d'écrasement par rapprochement des côtés du triangle, et fermeture progressive de l'angle au sommet des enfoncements 15, 16, les amorces de plis agissant en quelque sorte à la manière de charnières.

De préférence, le gousset 10 présente, en section transverse, au moins une première branche 20 et une seconde branche 21 sécantes, liées l'une à l'autre par une arête 22 qui s'étend longitudinalement du premier tronçon de fixation 12 au second tronçon de fixation 13, tel que cela est notamment visible sur les figures 3 et 4.

De préférence, le gousset 10 pourra se présenter sous forme d'un profilé ouvert, et plus particulièrement d'une cornière en L, dont l'arête 22 marquera préférentiellement le coin saillant inférieur, orienté vers l'habitacle.

Avantageusement, une telle configuration en forme d'équerre contribuera à rigidifier fonctionnellement le gousset 10, pour conférer à la carrosserie 3 sa rigidité en fonctionnement normal, tout en permettant de conserver une structure relativement fine et légère.

La première branche 20 et/ou la seconde branche 21 pourront éventuellement se prolonger par un ou des bords tombés 23, 24, qui pourront notamment contribuer à augmenter la rigidité fonctionnelle du gousset 10 et/ou procurer des surfaces de guidage et de fixation pour l'assemblage dudit gousset 10 à l'arc de toit 2 et au pied 4.

De préférence, le ou les enfoncements 15, 16 formant des amorces de plis pourront alors être marqués en creux dans l'arête 22.

Avantageusement, ce marquage en creux pourra être réalisé de manière relativement simple en enfonçant la matière par pliage ou emboutissage.

De préférence, tel que cela est notamment visible sur les figures 3 et 4, l'étendue de la section transverse du pied 4 arrière va en décroissant progressivement depuis la base inférieure 5 dudit pied 4 jusqu'à la portion supérieure 11 dudit pied 4 raccordée au gousset 10.

Ainsi, le pied 4 formera avantageusement une sorte de pilier, et plus particulièrement d'arc-boutant bombé vers l'extérieur (ici vers l'arrière) du véhicule, qui présente une base 5 large lui conférant une bonne assise et une bonne tenue sur le support d'enrouleur 6, et qui s'affine progressivement vers son sommet 11, de sorte à préserver la légèreté de la carrosserie et l'esthétisme de la ligne du véhicule tout en assurant une bonne résistance du pied 4 à la flexion.

Le pied 4 pourra avantageusement être formé d'un seul tenant, de préférence dans une tôle métallique, et plus particulièrement dans une tôle d'acier du genre acier ES, dont l'épaisseur sera préférentiellement comprise entre 1,2 mm et 2 mm, et plus particulièrement de l'ordre de 1,47 mm ou 1,5 mm.

Ladite tôle constitutive du pied 4 pourra avantageusement être pliée en L pour former une cornière, éventuellement pourvue de bords tombés 25, 26.

Par ailleurs, le pied 4 comprend de préférence des éléments raidisseurs 27, 28, du genre dépressions 27 et/ou bossages 28, agencés pour augmenter sa rigidité à la flexion.

Tel que cela est illustré sur les figures 1, 3 et 4, les dépressions 27 pourront former des décrochements rentrants dans la ligne de crête supérieure du pied 4, et plus particulièrement dans le bord tombé 25 correspondant, en conférant audit pied un aspect sensiblement en marches d'escalier.

Les bossages 28 pourront quant à eux faire saillie sur la surface inférieure du pied, et plus particulièrement de la branche correspondante de la cornière.

Dépressions 27 et bossage 28 pourront avantageusement être formés par emboutissage.

Avantageusement, les différentes dispositions constructives tendant à renforcer structurellement la rigidité du pied 4 à la flexion, et notamment le crénelage par les dépressions 27 et/ou bossages 28, permettent d'assurer entre autres une excellente tenue dudit pied 4 en cas de choc, et plus particulièrement en cas d'important effort F de traction exercé à la base 5 dudit pied 4, et par conséquent de préserver au mieux le volume de l'habitacle et d'assurer une retenue optimale des sièges 9 ou de la banquette arrière.

L'arc de toit 2 pourra quant à lui être avantageusement réalisé dans une tôle d'acier de même nuance et/ou de même épaisseur que le pied 4.

De préférence, tel que cela est illustré sur les figures 3 et 4, le gousset 10 est formé d'un seul tenant, préférentiellement dans une pièce de tôle métallique, et plus particulièrement dans une tôle d'acier du genre acier ES, distincte du pied arrière 4, et dont l'épaisseur E10 est de préférence comprise entre 0,8 mm et 1,1 mm, et plus particulièrement de l'ordre de 0,97 mm à 1,00 mm.

Les tronçons de fixation 12, 13 et le tronçon intermédiaire 14 seront donc de préférence venus de matière.

Avantageusement, le gousset 10 pourra être réalisé par pliage et/ou emboutissage, chacune de ses branches 20, 21 formant un pan de tôle, de l'épaisseur E10 susmentionnée, et l'arête 22 correspondant à une ligne de pliage.

Le choix d'une épaisseur E10 inférieure à celle de la tôle constitutive du pied 4, et/ou de celle de la tôle constitutive de l'arc de toit 2, contribuera avantageusement à faire du gousset 10 une zone de déformation préférentielle.

La présente invention concerne bien entendu en tant que telle une carrosserie 3 de véhicule qui comprend au moins un arc de toit 2 latéral soutenu à l'arrière par un sous-ensemble 1 selon l'invention, de telle sorte que le pied arrière 4 et l'arc de toit 2 recouvrent partiellement le gousset 10, en le chevauchant respectivement au contact de la face inférieure du premier tronçon de fixation 12 et au contact de la face supérieure du second tronçon de fixation 13, et en laissant à découvert le tronçon intermédiaire 14 fusible qui forme un pont de raccordement longitudinal entre le pied arrière 4 et l'arc de toit 2.

Avantageusement, l'assemblage pied 4 / gousset 10 / arc 2 se fera ainsi en strates emboîtées, selon une disposition sensiblement télescopique.

La fixation sera de préférence réalisée en soudage par points.

Les parois, et plus particulièrement les branches, respectives du pied 4 et du gousset 10, se chevaucheront sur la longueur correspondant au premier tronçon de fixation 12.

A cet effet, les branches de la partie supérieure 11 du pied 4 présenteront de préférence une forme sensiblement conjuguée aux branches correspondantes du gousset 10, de sorte à pouvoir épouser ces dernières sensiblement sur la majorité voire la totalité de leur surface le long du premier tronçon de fixation 12.

De même, les parois ou branches de l'extrémité de l'arc de toit 2 présenteront de préférence des formes sensiblement conjuguées aux branches correspondantes du gousset 10, de sorte à pouvoir épouser ces dernières sensiblement sur la majorité voire la totalité de leur surface le long du second tronçon de fixation 13.

On disposera ainsi de surfaces de liaison relativement importantes, assurant une bonne stabilité de l'assemblage, et permettant notamment de multiplier les points de soudure.

Avantageusement, le recouvrement du gousset 10 par le pied 4 d'une part, et par l'arc de toit 2 d'autre part, sera longitudinalement partiel, le pied 4 s'interrompant à la limite du premier tronçon de fixation 12 et l'arc de toit 2 à la limite du second tronçon de fixation 13, de sorte à ménager un intervalle libre correspondant au tronçon intermédiaire 14, au niveau duquel interviendra en premier lieu la déformation D par compression.

En cas de choc, le pied 4 peut donc, grâce au gousset 10, se déplacer selon au moins une composante de translation, et/ou s'articuler, par rapport à l'arc de toit 2, sans risque d'affaissement ou de dislocation de la structure de la carrosserie 3.

De façon conventionnelle, l'arc de toit 2 pourra être soutenu, à l'opposé du pied 4, par un montant de portière 30 et/ou par un montant de pare-brise (non représenté).

De préférence la carrosserie 3 comprendra deux sous-ensembles 1 selon l'invention agencés de façon sensiblement symétrique par rapport au plan sagittal du véhicule afin de soutenir respectivement l'arc de toit gauche et l'arc de toit droit dudit véhicule.

L'invention se rapporte également à un véhicule, en particulier à un véhicule automobile, équipé d'un sous-ensemble 1 de support d'arc de toit 2 selon l'une ou l'autre des variantes possibles de l'invention ou, plus globalement, d'une carrosserie 3 selon l'invention.

Selon une variante de réalisation particulièrement préférentielle, le véhicule constituera un cabriolet.

Le panneau de toit supporté par les arcs de toit 2 pourra alors être rétractable ou amovible, et par exemple réalisé dans une toile flexible formant capote.

## Revendications

1. Sous-ensemble de carrosserie (1) destiné à soutenir l'arrière d'un arc de toit (2) au sein d'une carrosserie (3) de véhicule, ledit sous-ensemble (1) comprenant un pied (4) arrière dont la base inférieure (5) est conçue pour venir se fixer et prendre appui sur la portion arrière de la carrosserie d'un véhicule formant support d'enrouleur de ceinture (6), ledit sous-ensemble (1) étant **caractérisé en ce qu'**il comporte un gousset (10) déformable, conçu pour être interposé longitudinalement entre la portion supérieure (11) du pied (4) arrière et l'arc de toit (2) soutenu par ledit sous-ensemble (1), ledit gousset (10) comprenant à cet effet un premier tronçon de fixation (12) permettant sa fixation au pied (4) arrière, un second tronçon de fixation (13) conçu pour permettre sa fixation à l'arc de toit (2), et un tronçon intermédiaire (14) fusible libre, qui joint le premier tronçon de fixation (12) au second tronçon de fixation (13) et qui présente une résistance à la compression longitudinale inférieure à celle du pied (4) arrière et à celle de l'arc de toit (2), le sous-ensemble de carrosserie étant **caractérisé en ce que** le pied arrière (4) et l'arc de toit (2) recouvrent partiellement le gousset (10), en le chevauchant respectivement au contact de la face inférieure du premier tronçon de fixation (12) et au contact de la face supérieure du second tronçon de fixation (13), et en laissant à découvert le tronçon intermédiaire (14) fusible qui forme un pont de raccordement longitudinal entre le pied arrière (4) et l'arc de toit (2).

2. Sous-ensemble selon la revendication 1 **caractérisé en ce que** le tronçon fusible (14) présente au moins un premier enfoncement transverse (15) formant une amorce de pli, et de préférence au moins un premier enfoncement transverse (15) et un second enfoncement transverse (16) répartis à distance l'un de l'autre sur la longueur dudit tronçon fusible (14), qui forment des amorces de plis successifs.

3. Sous-ensemble selon la revendication 2 **caractérisé en ce que** le ou les enfoncements (15, 16) délimitent des évidements sensiblement triangulaires, dont la base s'ouvre sur l'extérieur du gousset (10).

4. Sous-ensemble selon l'une des revendications 2 ou 3 **caractérisé en ce que** le gousset présente, en section transverse, au moins une première branche (20) et une seconde branche (21) sécantes, liées l'une à l'autre par une arête (22) qui s'étend longitudinalement du premier tronçon de fixation (12) au second tronçon de fixation (13), et **en ce que** le ou les enfoncements (15, 16) formant des amorces de plis sont marqués en creux dans ladite arête (22).

5. Sous-ensemble selon l'une des revendications précédentes **caractérisé en ce que** l'étendue de la section transverse du pied (4) arrière va en décroissant progressivement depuis sa base inférieure (5) jusqu'à sa portion supérieure (11) raccordée au gousset (10).

6. Sous-ensemble selon l'une des revendications précédentes **caractérisé en ce que** le pied (4) comprend des éléments raidisseurs (27, 28), du genre dépressions (27) et/ou bossages (28), agencés pour augmenter sa rigidité à la flexion.

7. Sous-ensemble selon l'une des revendications précédentes **caractérisé en ce que** le gousset (10) est formé d'un seul tenant dans une pièce de tôle métallique, distincte du pied (4) arrière, dont l'épaisseur (E10) est de préférence comprise entre 0,8 mm et 1,1 mm.

8. Carrosserie (3) de véhicule **caractérisée en ce qu'**elle comprend au moins un arc de toit (2) latéral soutenu à l'arrière par un sous-ensemble (1) selon l'une des revendications précédentes.

9. Véhicule, en particulier véhicule automobile, **caractérisé en ce qu'**il est équipé d'un sous-ensemble (1) de support d'arc de toit (2) selon l'une des revendications 1 à 7 ou d'une carrosserie (3) selon la revendication 8.

10. Véhicule selon la revendication 9 **caractérisé en ce qu'**il constitue un cabriolet.

## Patentansprüche

1. Karosserieunterbaugruppe (1), die dazu bestimmt ist, die Rückseite eines Bogens eines Dachs (2) innerhalb einer Fahrzeugkarosserie (3) zu stützen, wobei die Unterbaugruppe (1) einen hinteren Fuß (4) umfasst, dessen untere Basis (5) konzipiert ist, um sich auf dem hinteren Abschnitt der Karosserie eines Fahrzeugs zu befestigen und darauf aufzuliegen, indem ein Gurtaufrollträger (6) gebildet wird, Unterbaugruppe (1) **dadurch gekennzeichnet, dass** sie ein verformbares Stützelement (10) umfasst, das konzipiert ist, um längs zwischen dem oberen Abschnitt (11) des hinteren Fußes (4) und dem Dachbogen (2), der von der Unterbaugruppe (1) gestützt ist, eingefügt zu werden, wobei das Stützelement (10) dazu einen ersten Befestigungsabschnitt (12) umfasst, der sein Befestigen an dem hinteren Fuß (4) erlaubt, einen zweiten Befestigungsabschnitt (13), der konzipiert ist, um sein Befestigen an dem Dachbogen (2) zu erlauben, und einen freien Sicherungszwischenabschnitt (14), der den ersten Befestigungsabschnitt (12) mit dem zweiten Befestigungsabschnitt (13) verbindet und einen Längskompressionswiderstand kleiner als der des hinteren Fußes (4) und der des Dachbogens (2) aufweist, wobei die Karosserieunterbaugruppe **dadurch gekennzeichnet ist, dass** der hintere Fuß (4) und der Dachbogen (2) teilweise das Stützelement (10) abdecken, indem sie jeweils in Berührung mit der Innenfläche des ersten Befestigungsabschnitts (12) und in Berührung mit der Fläche des zweiten Befestigungsabschnitts (13) auf ihm sitzen, und wobei der Sicherungszwischenabschnitt (14), der eine Längsanschlussbrücke zwischen dem hinteren Fuß (4) und dem Dachbogen (2) bildet, freigelassen wird.

2. Unterbaugruppe nach Anspruch 1, **dadurch gekennzeichnet, dass** der Sicherungsabschnitt (14) mindestens eine erste Quervertiefung (15) aufweist, die einen Faltenansatz bildet, und bevorzugt mindestens eine erste Quervertiefung (15) und eine zweite Quervertiefung (16), die voneinander beabstandet auf der Länge des Sicherungsabschnitts (14) verteilt sind, die aufeinanderfolgende Faltenansätze bilden.

3. Unterbaugruppe nach Anspruch 2, **dadurch gekennzeichnet, dass** die Vertiefung oder Vertiefungen (15, 16) Aussparungen abgrenzen, die im Wesentlichen dreieckig sind, deren Basis sich zu der Außenseite des Stützelements (10) öffnet.

4. Unterbaugruppe nach einem der Ansprüche 2 oder 3, **dadurch gekennzeichnet, dass** das Stützelement im Querschnitt mindestens einen ersten Schenkel (20) und einen zweiten Schenkel (21), die einander schneiden, aufweist, die miteinander durch eine Kante (22) verbunden sind, die sich längs von dem ersten Befestigungsabschnitt (12) zu dem zweiten Befestigungsabschnitt (13) erstreckt, und dass die Vertiefung oder Vertiefungen (15, 16), die Faltenansätze bilden, vertieft in der Kante (22) markiert sind.

5. Unterbaugruppe nach einem der vorstehenden Ansprüche, **dadurch gekennzeichnet, dass** sich das Maß des Querschnitts des hinteren Fußes (4) allmählich von seiner unteren Basis (5) bis zu seinem oberen Abschnitt (11), der an das Stützelement (10) angeschlossen ist, verringert.

6. Unterbaugruppe nach einem der vorstehenden Ansprüche, **dadurch gekennzeichnet, dass** der Fuß (4) Versteifungselemente (27, 28) vom Typ Mulden (27) und/oder Buckel (28) umfasst, die eingerichtet sind, um seine Biegesteifigkeit zu erhöhen.

7. Unterbaugruppe nach einem der vorstehenden Ansprüche, **dadurch gekennzeichnet, dass** das Stützelement (10) aus einem einzigen Stück aus einem Metallblechteil gebildet ist, das von dem hinteren Fuß (4) getrennt ist, dessen Stärke (E10) bevorzugt zwischen 0,8 mm und 1,1 mm liegt.

8. Fahrzeugkarosserie (3), **dadurch gekennzeichnet, dass** sie mindestens einen seitlichen Dachbogen (2) umfasst, der an der Rückseite von einer Unterbaugruppe (1) nach einem der vorstehenden Ansprüche gestützt ist.

9. Fahrzeug, insbesondere Kraftfahrzeug, **dadurch gekennzeichnet, dass** es mit einer Unterbaugruppe (1) zum Stützen des Dachbogens (2) nach einem der Ansprüche 1 bis 7 oder einer Karosserie (3) nach Anspruch 8 ausgestattet ist.

10. Fahrzeug nach Anspruch 9, **dadurch gekennzeichnet, dass** es ein Cabriolet bildet.

## Claims

1. A body subassembly (1) intended to support the rear of a roof arch (2) within a vehicle body (3), said subassembly (1) including rear leg (4), the lower base (5) of which is designed to come to be secured and to rest on the rear portion of the body of a vehicle forming a seatbelt reel support (6), said subassembly (1) being **characterized in that** it comprises a deformable gusset plate (10), designed to be interposed longitudinally between the upper portion (11) of the rear leg (4) and the roof arch (2) supported by said subassembly (1), said gusset plate (10) including to this effect a first attachment section (12) permitting it to be attached to the rear leg (4), a second attachment section (13) designed to permit it to be attached to the roof arch (2), and a fusible free intermediate section (14) which joins the first attachment section (12) to the second attachment section (13) and which has a lower resistance to longitudinal compression than that of the rear leg (4) and than that of the roof arch (2), the body subassembly being **characterized in that** the rear leg (4) and the roof arch (2) partially cover the gusset plate (10), overlapping it respectively at contact of the lower face of the first attachment section (12) and at contact of the upper face of the second attachment section (13), and leaving uncovered the fusible intermediate section (14) which forms a longitudinal connecting bridge between the rear leg (4) and the roof arch (2).

2. The subassembly according to Claim 1, **characterized in that** the fusible section (14) has at least a first transverse depression (15), forming a leading fold, and preferably at least a first transverse depression (15) and a second transverse depression (16) distributed at a distance from one another over the length of said fusible section (14), which form successive leading folds.

3. The subassembly according to Claim 2, **characterized in that** the depression or depressions (15, 16) delimit substantially triangular recesses, the base of which opens on the exterior of the gusset plate (10).

4. The subassembly according to one of Claims 2 or 3, **characterized in that** the gusset plate has, in transverse section, at least a first (20) and a second (21) secant branch, linked to one another by an edge (22) which extends longitudinally from the first attachment section (12) to the second attachment section (13) and **in that** the depression (s) (15, 16) forming leading folds are debossed in said edge (22).

5. The subassembly according to one of the preceding claims, **characterized in that** the extent of the transverse section of the rear leg (4) decreases progressively from its lower base (5) to its upper portion (11) connected to the gusset plate (10).

6. The subassembly according to one of the preceding claims, **characterized in that** the leg (4) includes stiffening elements (27, 28) of the depression (27) or boss (28) type, arranged to increase its flexural rigidity.

7. The subassembly according to one of the preceding claims, **characterized in that** the gusset plate (10) is formed in one piece in a piece of metal sheet, distinct from the rear leg (4), the thickness (E10) of which is preferably comprised between 0.8 mm and 1.1 mm.

8. A vehicle body (3), **characterized in that** it includes at least one lateral roof arch (2), supported at the rear by a subassembly (1) according to one of the preceding claims.

9. A vehicle, in particular a motor vehicle, **characterized in that** it is equipped with a subassembly (1) for support of a roof arch (2) according to one of Claims 1 to 7 or a body (3) according to Claim 8.

10. The vehicle according to Claim 9, **characterized in that** it constitutes a convertible vehicle.
